# EUROPEAN PATENT APPLICATION

(11) **EP 4 741 347 A1**
(43) Date of publication of application: **13.05.2026**
(21) Application number: 24851853.2
(22) Date of filing: 06.08.2024
(51) Int. Cl.: C01G 45/00, C01G 37/00, C01G 53/00, H01M 4/505, H01M 4/525

(54) **ALKALI METAL-CONTAINING OXIDE, ELECTRODE, AND BATTERY**

(30) Priority: 10.08.2023 JP 2023131372
(71) Applicant: Sumitomo Chemical Company, Limited, Tokyo 103-6020 (JP); Kyoto University, Kyoto-shi, Kyoto 606-8501 (JP)
(72) Inventor: YAMABAYASHI Tsutomu, Niihama-shi, Ehime 792-8521 (JP); KAGEYAMA Hiroshi, Kyoto-shi, Kyoto 606-8501 (JP)
(74) Representative: Vossius & Partner Patentanwälte Rechtsanwälte mbB
(86) International application number: PCT/JP2024/028096
(87) International publication number: WO 2025/033430

(57) **Abstract**

The present disclosure provides an alkali metal-containing oxide including an alkali metal element and a metal element M other than the alkali metal element, wherein a ratio X/Y of a substance amount X of the alkali metal element included in the alkali metal-containing oxide to a substance amount Y of the metal element M is 1.2 to 2.0, and the metal element M includes two or more kinds of metal elements M^{S}, each having a valence such that an absolute value of a difference between an average valence for the same element and an integer closest to the average valence is 0.1 to 0.5.

## Description

### Technical Field

The present disclosure relates to an alkali metal-containing oxide, an electrode, and a battery.

### Background Art

Secondary batteries that perform charging and discharging by moving alkali metal ions between a positive electrode and a negative electrode are known. Among such secondary batteries, lithium-ion secondary batteries are representative and have already been put into practical use as small power sources for mobile phones, laptop computers, and the like. Furthermore, because lithium-ion secondary batteries can be used as large power sources such as power sources for automobiles such as electric vehicles and hybrid vehicles, and power sources for distributed power storage, the demand for them is increasing.

As an attempt to improve the capacity of lithium-ion secondary batteries, Patent Literature 1 discloses a lithium-excess positive electrode material with a high compositional ratio of lithium. Non-Patent Literature 1 reports a lithium-excess positive electrode material having a disordered rock-salt structure, Li_{1.2}Mn_{0.4}Ti_{0.4}O₂, and the like.

### Citation List

### Patent Literature

[Patent Literature 1] Japanese Unexamined Patent Application Publication No. 2008-98154

### Non Patent Literature

[Non-Patent Literature 1] nature communications 7, Article number: 13814 (2016)

### Summary of Invention

### Technical Problem

However, existing lithium-excess positive electrode materials are accompanied by voltage hysteresis during charging and discharging, and there is still room for improvement in energy efficiency.

The present disclosure has been made in view of the above-described circumstances, and an object thereof is to provide an alkali metal-containing oxide with high energy efficiency, and an electrode and a battery using the same.

### Solution to Problem

The present disclosure includes the following exemplary embodiments.
[1] An alkali metal-containing oxide including an alkali metal element and a metal element M other than the alkali metal element,
   wherein a ratio X/Y of a substance amount X of the alkali metal element included in the alkali metal-containing oxide to a substance amount Y of the metal element M is greater than 1.0 and not more than 2.0, and
   the metal element M includes two or more kinds of metal elements M^{S}, each having a valence such that an absolute value of a difference between an average valence for the same element and an integer closest to the average valence is 0.1 to 0.5.
[2] The alkali metal-containing oxide of [1], wherein the metal element M^{S} contains V and Mn.
[3] The alkali metal-containing oxide of [1] or [2], wherein the metal element M^{S} includes a combination of two kinds of metal elements in which an absolute value of a difference in average valence is 1 or more.
[4] An alkali metal-containing oxide including an alkali metal element and a metal element M other than the alkali metal element,
   wherein a ratio X/Y of a substance amount X of the alkali metal element included in the alkali metal-containing oxide to a substance amount Y of the metal element M is greater than 1.0 and not more than 2.0,
   the metal element M includes a metal element M¹ and a metal element M²,
   an average valence for the same element of the metal element M¹ is a non-integer, an average valence for the same element of the metal element M² is tetravalent or higher, and
   a difference: {(the average valence of the metal element M²) - (the average valence of the metal element M¹)} is 1 or more.
[5] The alkali metal-containing oxide according to [4], wherein the metal element M¹ contains Mn, and the metal element M² contains V.
[6] The alkali metal-containing oxide of any one of [1] to [5], having a crystal phase of a disordered rock-salt structure.
[7] The alkali metal-containing oxide of any one of [1] to [6], having an amorphous phase.
[8] The alkali metal-containing oxide of any one of [1] to [7], wherein when powder X-ray diffraction measurement is performed at 25°C using a CuKα ray, a half width of a peak observed in a range of 2θ of 42 to 46° is 0.5 to 5°.
[9] The alkali metal-containing oxide of any one of [1] to [8], represented by a general formula: AₓMnₐM'_{b}V_{c}O_{2+y}. (In the formula, 1<x≤2.0, 0.3≤a≤0.8, 0≤b≤0.3, 0.3≤c≤0.6, and 0≤y≤1.0, A is an alkali metal element, and M' contains at least one kind of element selected from the group consisting of Cr, Fe, Co, Ni, and Cu.)
[10] An electrode including the alkali metal-containing oxide of any one of [1] to [9].
[11] A battery including the electrode of [10].

### Advantageous Effects of Invention

According to the present disclosure, it is possible to provide an alkali metal-containing oxide with high energy efficiency, and an electrode and a battery using the same.

### Brief Description of Drawings

[FIG. 1] FIG. 1 is an X-ray diffraction chart of each lithium-containing oxide of Examples and Comparative Examples.
[FIG. 2] FIG. 2 is a diagram showing results of a charge/discharge test of Example 1.
[FIG. 3] FIG. 3 is a diagram showing results of a charge/discharge test of Example 2.
[FIG. 4] FIG. 4 is a diagram showing results of a charge/discharge test of Example 3.
[FIG. 5] FIG. 5 is a diagram showing results of a charge/discharge test of Example 4.
[FIG. 6] FIG. 6 is a diagram showing results of a charge/discharge test of Comparative Example 1.
[FIG. 7] FIG. 7 is a scanning transmission electron microscope image of a sample of Example 2.
[FIG. 8] FIG. 8 is an enlarged view of the scanning transmission electron microscope image of FIG. 7.
[FIG. 9] FIG. 9 is a scanning transmission electron microscope image of the sample of Example 2.
[FIG. 10] FIG. 10 is a selected area electron diffraction pattern of the sample of Example 2.
[FIG. 11] FIG. 11 is an electron energy loss spectrum of the sample of Example 2.
[FIG. 12] FIG. 12 is an electron energy loss spectrum of the sample of Example 2.
[FIG. 13] FIG. 13 is a scanning transmission electron microscope image of a sample of Comparative Example 1.
[FIG. 14] FIG. 14 is an electron energy loss spectrum of the sample of Comparative Example 1.
[FIG. 15] FIG. 15 is an electron energy loss spectrum of the sample of Comparative Example 1.

### Description of Embodiments

The alkali metal-containing oxide according to the present embodiment is an alkali metal-containing oxide including an alkali metal element and a metal element M other than the alkali metal element, wherein a ratio X/Y of a substance amount X of the alkali metal element included in the alkali metal-containing oxide to a substance amount Y of the metal element M is greater than 1.0 and not more than 2.0, and may be any of alkali metal oxides that satisfy the following conditions (1) and (2). The alkali metal-containing oxide according to the present disclosure satisfies at least one of the conditions (1) and (2), but may satisfy both. The alkali metal-containing oxide may include an alkali metal element and a metal element M other than the alkali metal element as constituent elements. (1) The metal element M includes two or more kinds of metal elements M^{S}, each having a valence such that an absolute value of a difference between an average valence for the same element and an integer closest to the average valence is 0.1 to 0.5. (2) The metal element M includes a metal element M¹ and a metal element M², an average valence for the same element of the metal element M¹ is a non-integer, an average valence for the same element of the metal element M² is tetravalent or higher, and a difference: {(the average valence of the metal element M²) - (the average valence of the metal element M¹)} is 1 or more.

Hereinafter, when referring to each of the alkali metal-containing oxides that satisfy the above conditions (1) and (2), the alkali metal oxide that satisfies the condition (1) is referred to as a first alkali metal-containing oxide, and the alkali metal oxide that satisfies the condition (2) is referred to as a second alkali metal-containing oxide. In addition, when referring to the alkali metal-containing oxides that satisfy the conditions (1) and (2) without particular distinction, they are also referred to as the alkali metal-containing oxides of the present embodiment.

The alkali metal-containing oxide according to the present embodiment includes a metal element having a non-integer average valence. The present inventors consider the reason why such an alkali metal-containing oxide is excellent in energy efficiency as follows.

First, the electrical resistance of the positive electrode active substance is cited as one of the factors related to charge/discharge efficiency. Here, if an ion having no valence electrons (an ion with an integer valence) such as Ti4+ as in Comparative Example 1 is used as an element of the positive electrode active substance, the electron conduction of the positive electrode active substance tends to decrease, and the electrical resistance tends to increase. On the other hand, when a metal element other than an alkali metal has a non-integer valence and comes to have valence electrons, it is considered that the electron conductivity of the positive electrode active substance is improved, contributing to the improvement of energy efficiency.

In addition, a so-called alkali metal excess-containing oxide, in which the substance amount of the alkali metal element in the alkali metal-containing oxide is larger than the substance amount of the metal element M other than the alkali metal element, has a characteristic that an oxidation-reduction reaction of oxygen contributes to the charge/discharge capacity during charging and discharging, and the oxidation-reduction reaction of oxygen generally exhibits a large voltage hysteresis.

Here, in the first alkali metal-containing oxide, by including two or more kinds of metal elements M^{S} having a predetermined average valence of the present application as the metal element M, conductivity can be improved, so the charge/discharge capacity derived from the oxidation-reduction reaction of the metal element increases. In addition, in the second alkali metal-containing oxide, even when the average valence of the metal element M² is an integer, the charge/discharge capacity derived from the oxidation-reduction reaction of the metal element M¹ increases because the difference in average valence with the metal element M¹ is 1 or more. As a result, it is considered that the capacity derived from the oxidation-reduction reaction of oxygen is relatively reduced, the dependence is lowered, and the energy efficiency is improved.

In the present specification, the "average valence" of a metal element, unless otherwise specified, is the sum obtained by multiplying the value of an integer valence by the abundance ratio of the element having that integer valence for atoms of the same element. The integer closest to the average valence is the integer with the smallest absolute value of the difference from the average valence, and depending on the value of the average valence, it can be either an integer larger or smaller than the average valence. In addition, when the average valence is a half-integer, the integer closest to the average valence may be either an integer larger or smaller than the half-integer, and in this case, the absolute value of the difference is 0.5. For example, when the average valence is 2.5, the integer closest to the average valence may be either 3 or 2. The average valence of a metal element can be calculated from the ratio of the valence of each atom of the same element by electron energy loss spectroscopy measurement.

In the alkali metal-containing oxide of the present embodiment, the alkali metal element is not particularly limited, but may include at least one or more selected from the group consisting of Li, Na, K, Rb, and Cs, may include at least one or more selected from the group consisting of Li, Na, and K, may include at least one of Li and Na, and may include Li.

Of the total amount of alkali metal elements included in the alkali metal-containing oxide of the present embodiment, the content of one kind of alkali metal element may be, for example, 90 mol% or more, 95 mol% or more, 98 mol% or more, 99 mol% or more, or 99.9 mol% or more, and may substantially include only one kind of alkali metal element (that is, the content of alkali metal elements other than the one kind of alkali metal element is substantially 0 mol%, and it can also be said that the content of the one kind of alkali metal element is 100 mol%.). The content of the one kind of alkali metal element may be adjusted within the above-mentioned range, and may be, for example, 90 to 100 mol% of the total amount of alkali metal elements included in the alkali metal-containing oxide of the present embodiment. The one kind of alkali metal element may be Li, Na, or K, may be Li or Na, and may be Li.

In the alkali metal-containing oxide of the present embodiment, the content of the alkali metal element may be, for example, 6 to 15% by mass, 7 to 13% by mass, or 8 to 12% by mass with respect to the total amount of the alkali metal-containing oxide.

The metal element M in the alkali metal-containing oxide of the present embodiment is a metal element other than an alkali metal element. The metal element M may include a transition metal element and an element of the zinc group (Group 12), and may include a transition metal element. The transition metal element may include an element of the 4th period. The transition metal element may include Group 4 (titanium group) to Group 11 (copper group) of the periodic table. The transition metal element may include an element of Group 4 (titanium group) to Group 11 (copper group) and the 4th period of the periodic table, that is, may include at least one selected from the group consisting of Ti, V, Cr, Mn, Fe, Co, Ni, and Cu.

The content of the metal element M in the alkali metal-containing oxide of the present embodiment may be, for example, 40 to 65% by mass, 45 to 60% by mass, or 48 to 58% by mass with respect to the total amount of the alkali metal-containing oxide. The content of the transition metal element in the alkali metal-containing oxide of the present embodiment may be, for example, 40 to 65% by mass, 45 to 60% by mass, or 48 to 58% by mass with respect to the total amount of the alkali metal-containing oxide.

The first alkali metal-containing oxide includes a metal element M^{S}. The metal element M^{S} is a metal element having a valence such that an absolute value of a difference between an average valence for the same element and an integer closest to the average valence is 0.1 to 0.5. The average valence of the metal element M^{S} is a non-integer.

The metal element M^{S} may include a transition metal element and an element of the zinc group, and may include a transition metal element. The transition metal element as the metal element M^{S} may include an element of the 4th period. The transition metal element as the metal element M^{S} may include Group 4 (titanium group) to Group 11 (copper group) of the periodic table. The transition metal element as the metal element M^{S} may include an element of Group 4 (titanium group) to Group 11 (copper group) and the 4th period of the periodic table.

In the first alkali metal-containing oxide, the metal element M^{S} may include at least one selected from the group consisting of Ti, V, Cr, Mn, Fe, Co, Ni, and Cu, may include at least one of V and Mn, and may include V and Mn.

The content of the metal element M^{S} in the first alkali metal-containing oxide may be, for example, 40 to 65% by mass, 45 to 60% by mass, or 48 to 58% by mass with respect to the total amount of the first alkali metal-containing oxide.

The metal element M^{S} may include a combination of two kinds of metal elements in which an absolute value of a difference in average valence is 1 or more. The absolute value of the difference may be, for example, 1 to 3, 1.1 to 3, 1.2 to 2.8, 1.5 to 2.7, or 1.7 to 2.6. Examples of such a combination of metal elements include a combination of one kind of a metal element M^{S1} and one kind of a metal element M^{S2} described later, and may be a combination of Mn and V.

In the first alkali metal-containing oxide, the absolute value of the difference between the average valence of the metal element M^{S} and the integer closest to the average valence may be, for example, 0.15 to 0.5, 0.2 to 0.5, 0.25 to 0.5, 0.3 to 0.5, or 0.35 to 0.5.

In the first alkali metal-containing oxide, the metal element M^{S} may include a metal element M^{S1} having an average valence of 2 to 4 (not including integer values) and a metal element M^{S2} having a valence of 4 to 6 (not including integer values). In the alkali metal-containing oxide, the metal element M^{S1} and the metal element M^{S2} are different elements.

In the first alkali metal-containing oxide, the metal element M^{S1} may include at least one selected from the group consisting of Ti, V, Cr, Mn, Fe, Co, Ni, and Cu, and may include Mn.

The absolute value of the difference between the average valence of the metal element M^{S1} and the integer closest to the average valence may be, for example, 0.15 to 0.5, 0.2 to 0.5, 0.25 to 0.5, 0.3 to 0.5, or 0.35 to 0.5. The average valence of the metal element M^{S1} may be, for example, 2 to 3.5 (not including integer values), greater than 2 and less than 3, 2.1 to 2.9, 2.2 to 2.8, or 2.3 to 2.75.

The content of the metal element M^{S1} in the first alkali metal-containing oxide may be, for example, 15 to 40% by mass, or 20 to 35% by mass with respect to the total amount of the first alkali metal-containing oxide.

The metal element M^{S1} may include a metal element in at least one of a divalent state and a trivalent state for the same element.

In the first alkali metal-containing oxide, for a metal element including the divalent state, the content of the divalent metal element may be, for example, 20 to 80 mol%, 25 to 75 mol%, 30 to 70 mol%, or 40 to 60 mol% with respect to the total amount of the same metal element as the divalent metal element. For example, the metal element M^{S1} may include Mn²⁺, and in this case, the content of Mn²⁺ may be, for example, 20 to 80 mol%, 25 to 75 mol%, 30 to 70 mol%, or 40 to 60 mol% with respect to the total amount of Mn included in the alkali metal-containing oxide.

In the first alkali metal-containing oxide, for a metal element including the trivalent state, the content of the trivalent metal element may be, for example, 20 to 80 mol%, 25 to 75 mol%, 30 to 70 mol%, or 40 to 60 mol% with respect to the total amount of the same metal element as the trivalent metal element. For example, the metal element M^{S1} may include Mn³⁺, and in this case, the content of Mn³⁺ may be, for example, 20 to 80 mol%, 25 to 75 mol%, 30 to 70 mol%, or 40 to 60 mol% with respect to the total amount of Mn included in the first alkali metal-containing oxide.

In addition, when the metal element M^{S1} includes both divalent and trivalent states for the same element, the above content of the metal element in the divalent or trivalent state among the metal elements may be a value with respect to the total amount of the metal elements in the divalent and trivalent states among the metal elements, instead of the total amount of the metal elements including both the divalent and trivalent states. When the metal element M^{S1} includes a metal element in at least one of a divalent state and a trivalent state, in the first alkali metal-containing oxide, the total amount of the divalent and trivalent metal elements with respect to the total amount of the same metal element as the metal element in at least one of the divalent and trivalent states may be, for example, 80 mol% or more, 90 mol% or more, 95 mol% or more, or 99 mol% or more. When the metal element M^{S1} includes at least one of Mn²⁺ and Mn³⁺, in the first alkali metal-containing oxide, the total amount of Mn²⁺ and Mn³⁺ with respect to the total amount of Mn may be, for example, 80 mol% or more, 90 mol% or more, 95 mol% or more, or 99 mol% or more.

In the first alkali metal-containing oxide, the metal element M^{S2} may include at least one selected from the group consisting of Ti, V, Cr, Mn, and Fe, and may include V.

The absolute value of the difference between the average valence of the metal element M^{S2} and the integer closest to the average valence may be, for example, 0.2 to 0.5, 0.25 to 0.5, 0.3 to 0.48, or 0.35 to 0.47. The average valence of the metal element M^{S2} may be, for example, 4 to 5.5 (not including integer values), greater than 4 and less than 5, 4.1 to 4.9, 4.2 to 4.8, 4.3 to 4.75, or 4.4 to 4.7.

The content of the metal element M^{S2} in the first alkali metal-containing oxide may be, for example, 15 to 40% by mass, or 20 to 35% by mass with respect to the total amount of the first alkali metal-containing oxide.

The metal element M^{S2} may include a metal element in at least one of a tetravalent state and a pentavalent state for the same element.

In the first alkali metal-containing oxide, for a metal element including the tetravalent state, the content of the tetravalent metal element may be, for example, 20 to 80 mol%, 25 to 75 mol%, 30 to 70 mol%, or 40 to 60 mol% with respect to the total amount of the same metal element as the tetravalent metal element. For example, the metal element M^{S2} may include V⁴⁺, and in this case, the content of V⁴⁺ may be, for example, 20 to 80 mol%, 25 to 75 mol%, 30 to 70 mol%, or 40 to 60 mol% with respect to the total amount of V included in the alkali metal-containing oxide.

In the first alkali metal-containing oxide, for a metal element including the pentavalent state, the content of the pentavalent metal element may be, for example, 20 to 80 mol%, 25 to 75 mol%, 30 to 70 mol%, or 40 to 60 mol% with respect to the total amount of the same metal element as the pentavalent metal element. For example, the metal element M^{S2} may include V⁵⁺, and in this case, the content of V⁵⁺ may be, for example, 20 to 80 mol%, 25 to 75 mol%, 30 to 70 mol%, or 40 to 60 mol% with respect to the total amount of V included in the alkali metal-containing oxide.

In addition, when the metal element M^{S2} includes both tetravalent and pentavalent states for the same element, the above content of the metal element in the tetravalent or pentavalent state among the metal elements may be a value with respect to the total amount of the metal elements in the tetravalent and pentavalent states among the metal elements, instead of the total amount of the metal elements including both the tetravalent and pentavalent states. When the metal element M^{S2} includes a metal element in at least one of a tetravalent state and a pentavalent state, in the first alkali metal-containing oxide, the total amount of the tetravalent and pentavalent metal elements with respect to the total amount of the same metal element as the metal element in at least one of the tetravalent and pentavalent states may be, for example, 80 mol% or more, 90 mol% or more, 95 mol% or more, or 99 mol% or more. When the metal element M^{S2} includes at least one of V⁴⁺ and V⁵⁺, in the first alkali metal-containing oxide, the total amount of V⁴⁺ and V⁵⁺ with respect to the total amount of V may be, for example, 80 mol% or more, 90 mol% or more, 95 mol% or more, or 99 mol% or more.

In the first alkali metal-containing oxide, the metal element M^{S} may account for 70 mol% or more, 80 mol% or more, 85 mol% or more, or 90 mol% or more of the total amount of atoms included in the metal element M.

When the first alkali metal-containing oxide includes V and Mn, it may further include a transition metal element other than V and Mn as the metal element M. Examples of such a transition metal element (other transition metal elements) include at least one kind of element selected from the group consisting of Cr, Fe, Co, Ni, and Cu, and may be at least one of Ni and Cr. In this case, the metal element M^{S1} may be Mn, and the metal element M^{S2} may be V.

In the first alkali metal-containing oxide, the content of the other transition metal elements may be 30 mol% or less, 0.1 to 20 mol%, 1 to 15 mol%, or 5 to 10 mol% of the total amount of atoms included in the metal element M. In addition, the content of the other transition metal elements in the alkali metal-containing oxide may be, for example, 15% by mass or less, 1 to 10% by mass, or 2 to 8% by mass with respect to the total amount of the alkali metal-containing oxide.

The second alkali metal-containing oxide includes a metal element M¹ and a metal element M². The metal element M¹ is a metal element whose average valence for the same element is a non-integer. The metal element M² is a metal element whose average valence for the same element is tetravalent or higher.

In the second alkali metal-containing oxide, the metal element M¹ may include a transition metal element and an element of the zinc group, and may include a transition metal element. The transition metal element as the metal element M¹ may include an element of the 4th period. The transition metal element as the metal element M¹ may include Group 4 (titanium group) to Group 11 (copper group) of the periodic table. The transition metal element as the metal element M¹ may include an element of Group 4 (titanium group) to Group 11 (copper group) and the 4th period of the periodic table.

In the second alkali metal-containing oxide, the metal element M¹ may include at least one selected from the group consisting of Ti, V, Cr, and Mn, may include Mn, and may be Mn.

The absolute value of the difference between the average valence of the metal element M¹ and the integer closest to the average valence may be, for example, 0.1 to 0.5, 0.2 to 0.5, 0.25 to 0.5, 0.3 to 0.48, or 0.35 to 0.47.

The average valence of the metal element M¹ may be, for example, greater than 2 and less than 3, 2.1 to 2.9, 2.2 to 2.8, or 2.3 to 2.75.

The content of the metal element M¹ in the second alkali metal-containing oxide may be, for example, 15 to 40% by mass, or 20 to 35% by mass with respect to the total amount of the second alkali metal-containing oxide.

The metal element M¹ may include a metal element in at least one of a divalent state and a trivalent state for the same element.

In the second alkali metal-containing oxide, for a metal element including the divalent state, the content of the divalent metal element may be, for example, 15 to 80 mol%, 20 to 60 mol%, 25 to 55 mol%, or 30 to 45 mol% with respect to the total amount of the same metal element as the divalent metal element. For example, the metal element M¹ may include Mn²⁺, and in this case, the content of Mn²⁺ may be, for example, 15 to 80 mol%, 20 to 60 mol%, 25 to 55 mol%, or 30 to 45 mol% with respect to the total amount of Mn included in the alkali metal-containing oxide.

In the second alkali metal-containing oxide, for the trivalent metal element, the content of the trivalent metal element may be, for example, 20 to 85 mol%, 40 to 80 mol%, 45 to 75 mol%, or 55 to 70 mol% with respect to the total amount of the metal element. For example, the metal element M¹ may include Mn³⁺, and in this case, the content of Mn³⁺ may be, for example, 20 to 85 mol%, 40 to 80 mol%, 45 to 75 mol%, or 55 to 70 mol% with respect to the total amount of Mn included in the alkali metal-containing oxide.

In addition, when the metal element M¹ includes both divalent and trivalent states for the same element, the above content of the metal element in the divalent or trivalent state among the metal elements may be a value with respect to the total amount of the metal elements in the divalent and trivalent states among the metal elements, instead of the total amount of the metal elements including both the divalent and trivalent states. When the metal element M¹ includes a metal element in at least one of a divalent state and a trivalent state, in the second alkali metal-containing oxide, the total amount of the divalent and trivalent metal elements with respect to the total amount of the same metal element as the metal element in at least one of the divalent and trivalent states may be, for example, 80 mol% or more, 90 mol% or more, 95 mol% or more, or 99 mol% or more. When the metal element M¹ includes at least one of Mn²⁺ and Mn³⁺, in the second alkali metal-containing oxide, the total amount of Mn²⁺ and Mn³⁺ with respect to the total amount of Mn may be, for example, 80 mol% or more, 90 mol% or more, 95 mol% or more, or 99 mol% or more.

In the second alkali metal-containing oxide, the metal element M² may include a transition metal element and an element of the zinc group, and may include a transition metal element. The transition metal element as the metal element M² may include an element of the 4th period. The transition metal element as the metal element M² may include Group 4 (titanium group) to Group 11 (copper group) of the periodic table. The transition metal element as the metal element M² may include an element of Group 4 (titanium group) to Group 11 (copper group) and the 4th period of the periodic table.

In the second alkali metal-containing oxide, the metal element M² may include at least one selected from the group consisting of Ti, V, Cr, and Mn, may include V, and may be V.

The average valence of the metal element M² may be, for example, 4.1 to 5.9, 4.2 to 5.8, 4.5 to 5.5, 4.4 to 5.4, or 4.7 to 5.4.

The content of the metal element M² in the second alkali metal-containing oxide may be, for example, 15 to 40% by mass, or 20 to 35% by mass with respect to the total amount of the second alkali metal-containing oxide.

The total content of the metal elements M¹ and M² in the second alkali metal-containing oxide may be, for example, 40 to 65% by mass, 45 to 60% by mass, or 48 to 58% by mass with respect to the total amount of the second alkali metal-containing oxide.

In the second alkali metal-containing oxide, the total of the metal elements M¹ and M² may account for, for example, 70 mol% or more, 80 mol% or more, 85 mol% or more, or 90 mol% or more of the total amount of atoms included in the metal element M. In the second alkali metal-containing oxide, the total of the metal elements M¹ and M² may be, for example, 100 mol% or less of the total amount of atoms included in the metal element M. In the second alkali metal-containing oxide, the total of the metal elements M¹ and M² may be adjusted within the above-mentioned range, and may be, for example, 70 to 100 mol% of the total amount of atoms included in the metal element M.

When the second alkali metal-containing oxide includes V and Mn, it may further include a transition metal element other than V and Mn as the metal element M. Examples of such a transition metal element (other transition metal elements) include at least one kind of element selected from the group consisting of Ti, Cr, Fe, Co, Ni, and Cu, and may be at least one of Cr and Ni. In this case, the metal element M¹ may be Mn, and the metal element M² may be V.

In the second alkali metal-containing oxide, the content of the other transition metal elements may be, for example, 30 mol% or less, 0.1 to 30 mol%, 0.1 to 20 mol%, 1 to 15 mol%, or 5 to 10 mol% of the total amount of atoms included in the metal element M.

In addition, the content of the other transition metal elements in the alkali metal-containing oxide may be, for example, 15% by mass or less, 1 to 15% by mass, 1 to 10% by mass, or 2 to 8% by mass with respect to the total amount of the alkali metal-containing oxide.

The metal element M² may include a metal element in at least one of a tetravalent state and a pentavalent state for the same element.

In the second alkali metal-containing oxide, for a metal element including the tetravalent state, the content of the tetravalent metal element may be, for example, 60 mol% or less, 50 mol% or less, 35 mol% or less, 30 mol% or less, 20 mol% or less, or 10 mol% or less with respect to the total amount of the same metal element as the tetravalent metal element. For example, for the metal element M², the content of V⁴⁺ may be, for example, 60 mol% or less, 50 mol% or less, 35 mol% or less, 30 mol% or less, 20 mol% or less, or 10 mol% or less with respect to the total amount of V included in the alkali metal-containing oxide.

In the second alkali metal-containing oxide, for a metal element including the pentavalent state, the content of the pentavalent metal element may be, for example, 40 mol% or more, 50 mol% or more, 65 mol% or more, 70 mol% or more, 80 mol% or more, or 90 mol% or more with respect to the total amount of the same metal element as the pentavalent metal element. For example, the metal element M² may include V⁵⁺, and in this case, the content of V⁵⁺ may be, for example, 40 mol% or more, 50 mol% or more, 65 mol% or more, 70 mol% or more, 80 mol% or more, or 90 mol% or more with respect to the total amount of V included in the alkali metal-containing oxide.

In addition, when the metal element M² includes both tetravalent and pentavalent states for the same element, the above content of the metal element in the tetravalent or pentavalent state among the metal elements may be a value with respect to the total amount of the metal elements in the tetravalent and pentavalent states among the metal elements, instead of the total amount of the metal elements including both the tetravalent and pentavalent states. When the metal element M² includes a metal element in at least one of a tetravalent state and a pentavalent state, in the second alkali metal-containing oxide, the total amount of the tetravalent and pentavalent metal elements with respect to the total amount of the same metal element as the metal element in at least one of the tetravalent and pentavalent states may be, for example, 80 mol% or more, 90 mol% or more, 95 mol% or more, or 99 mol% or more. When the metal element M² includes at least one of V⁴⁺ and V⁵⁺, in the second alkali metal-containing oxide, the total amount of V⁴⁺ and V⁵⁺ with respect to the total amount of V may be, for example, 80 mol% or more, 90 mol% or more, 95 mol% or more, or 99 mol% or more.

In the second alkali metal-containing oxide, the average valence of the metal element M² is 1 or more greater than the average valence of the metal element M¹. The difference: {(average valence of metal element M²) - (average valence of metal element M¹)} may be, for example, 1 to 3, 1.1 to 3, 1.2 to 2.8, 1.5 to 2.7, or 1.7 to 2.6.

In the alkali metal-containing oxide of the present embodiment, the ratio X/Y may be, for example, 1.1 to 2.0, 1.2 to 2.0, 1.2 to 1.8, or 1.2 to 1.6.

The content of oxygen in the alkali metal-containing oxide of the present embodiment may be, for example, 25 to 48% by mass, or 30 to 45% by mass.

The alkali metal-containing oxide of the present embodiment may be one represented by a general formula: AₓMnₐM'_{b}V_{c}O_{2+y}. (In the above general formula, 1<x≤2.0, 0.3≤a≤0.8, 0≤b≤0.3, 0.3≤c≤0.6, and 0≤y≤1.0, A is an alkali metal element, and M' contains at least one kind of element selected from the group consisting of Ti, Cr, Fe, Co, Ni, and Cu.)

In the above general formula, x may be, for example, 1.1 to 1.8, or 1.2 to 1.6. In the above general formula, a may be, for example, 0.3 to 0.6. In the above general formula, b may be, for example, 0 to 0.25, 0.01 to 0.25, or 0.03 to 0.2. In the above general formula, c may be, for example, 0.3 to 0.6.

The alkali metal-containing oxide of the present embodiment may have a crystal phase. The crystal phase may be a crystal phase of a disordered rock-salt structure. In addition, the alkali metal-containing oxide of the present embodiment may have an amorphous phase, and may have an amorphous phase and a crystal phase.

For the alkali metal-containing oxide of the present embodiment, when powder X-ray diffraction measurement is performed at 25°C using a CuKα ray, a peak having a half width of 0.5 to 5° may be observed in a range of 20 of 42 to 46°.

The half width of the peak may be, for example, 0.6 to 4°, 0.7 to 3°, or 1 to 2.5°. In the present specification, the half width is a full width at half maximum.

A method for producing the alkali metal-containing oxide of the present embodiment is not particularly limited, but a method of mixing raw materials by a ball mill can be mentioned.

The raw materials are not particularly limited, but examples include an oxide containing a low-valence metal element M^{S} or M¹ and an oxide containing a high-valence metal element M^{S} or M². Examples of the oxide containing a low-valence metal element M^{S} or M¹ include an oxide containing a divalent metal element M^{S} or M¹, and for example, MnO, VO, CrO, and the like can be mentioned. Examples of the oxide containing a high-valence metal element M^{S} or M² include an oxide containing a tetravalent to heptavalent metal element M^{S}, and for example, the oxide may include V⁵⁺, Cr⁴⁺, Cr⁵⁺, Cr⁶⁺, Mn⁵⁺, Mn⁶⁺, Mn⁷⁺, or Ni⁴⁺. The alkali metal source may be included in at least one of the oxides containing low-valence and high-valence metal elements M^{S} (or M¹ or M²), and may be included in the oxide containing a high-valence metal element M^{S} or M².

The conditions of the ball mill are not particularly limited. The rotation speed of the ball mill may be, for example, 100 to 700 rpm. The mixing time by the ball mill may be, for example, 0.5 to 72 hours, or 10 to 60 hours. In addition, the mixing time by the ball mill may be, for example, 20 to 72 hours, or 30 to 60 hours.

The alkali metal-containing oxide of the present embodiment can be used for a material of a battery (such as a battery that generates a current with the movement of alkali metal ions, such as a lithium-ion battery or a sodium-ion battery). That is, the battery of the present embodiment includes the above-described alkali metal-containing oxide. The battery may be a primary battery or a secondary battery. In addition, the battery may be a non-aqueous secondary battery. In the battery, the above-described lithium-containing oxide may be included in an electrode.

The battery of the present embodiment has a positive electrode, a negative electrode, and an electrolyte disposed between the positive electrode and the negative electrode.

The positive electrode of the present embodiment includes a current collector and a positive electrode mixture supported on the current collector. The positive electrode mixture may form a positive electrode mixture layer on the current collector.

The positive electrode mixture may include the alkali metal-containing oxide of the present embodiment, and may include a conductive material (conductive auxiliary agent), a binder, and the like as necessary. That is, the alkali metal-containing oxide of the present embodiment may be included in a positive electrode active substance. The positive electrode active substance may include at least one of the first alkali metal-containing oxide and the second alkali metal-containing oxide.

Examples of the conductive material include carbon materials such as natural graphite, artificial graphite, cokes, carbon black, and acetylene black. Examples of the binder can include thermoplastic resins, specific examples of which include fluororesins such as polyvinylidene fluoride (hereinafter also referred to as "PVDF"), polytetrafluoroethylene, ethylene tetrafluoride-propylene hexafluoride-vinylidene fluoride-based copolymers, propylene hexafluoride-vinylidene fluoride-based copolymers, and ethylene tetrafluoride-perfluorovinyl ether-based copolymers; and polyolefin resins such as polyethylene and polypropylene can be mentioned. As the current collector, Al, Ni, stainless steel, or the like can be used.

As a method for supporting the positive electrode mixture on the current collector, a method of pressure molding, a method of making the electrode mixture into a paste using an organic solvent or the like, applying it onto the current collector, and fixing it by pressing after drying, and the like can be mentioned. When making a paste, for example, a slurry composed of the positive electrode active substance, a conductive material, a binder, and an organic solvent is prepared. Examples of the organic solvent include amine-based solvents such as N,N-dimethylaminopropylamine and diethylenetriamine; ether-based solvents such as ethylene oxide and tetrahydrofuran; ketone-based solvents such as methyl ethyl ketone; ester-based solvents such as methyl acetate; and aprotic polar solvents such as dimethylacetamide and N-methyl-2-pyrrolidone. Examples of a method for applying the electrode mixture to the current collector include a slit die coating method, a screen coating method, a curtain coating method, a knife coating method, a gravure coating method, an electrostatic spray method, and the like.

The negative electrode of the battery is not particularly limited, and may be one that includes a negative electrode active material and, as necessary, includes a conductive auxiliary agent, a binder, and the like. For example, as a negative electrode active material for a lithium-ion battery, simple substances of elements such as Li, Si, P, Sn, Si-Mn, Si-Co, Si-Ni, In, and Au, and alloys or composites including these elements, carbon materials such as graphite, and substances in which lithium ions are inserted between layers of the carbon material can be mentioned. In the case of a negative electrode of a sodium-ion battery, a substance in which Li of the substance mentioned as the negative electrode material for a lithium-ion battery is replaced with Na can be used as the negative electrode material.

The electrolyte of the battery is not particularly limited, and an electrolytic solution in which an alkali metal salt is dissolved in an organic solvent can be used. In addition, the electrolyte may be a solid electrolyte. Examples of the alkali metal salt include iodide salts, tetrafluoroborate salts, hexafluorophosphate salts, bis(fluorosulfonyl)imide salts, bis(trifluoromethylsulfonyl)imide salts, and the like.

The organic solvent included in the electrolytic solution is not particularly limited, but examples include non-aqueous solvents, for example, cyclic carbonate esters such as ethylene carbonate (EC) or propylene carbonate (PC), linear carbonate esters such as dimethyl carbonate (DMC), diethyl carbonate (DEC), or ethyl methyl carbonate (EMC), or sultones, and the like. The solvent may be used alone or in combination of two or more kinds.

### [Examples]

### (Example 1)

A Li₃VO₄ powder, which is a raw material, was produced as follows. That is, lithium carbonate (manufactured by FUJIFILM Wako Pure Chemical Corporation) and vanadium (V) oxide (manufactured by FUJIFILM Wako Pure Chemical Corporation) were mixed at a molar ratio of 3:1 and fired in air at 650°C for 12 hours to obtain a powder of Li₃VO₄.

MnO powder (manufactured by Sigma-Aldrich Co. LLC) and the Li₃VO₄ powder obtained as described above were mixed at a molar ratio of 0.6:0.4, and zirconia balls with a diameter of 4 mm and the above mixed powder were introduced into a zirconia ball mill container so as to have a mass ratio of 65:1. The ball mill container was introduced into a planetary ball mill apparatus (PM²00, manufactured by Retsch GmbH), and ball milling was performed at a rotation speed of 500 rpm for 48 hours to obtain a lithium-containing oxide.

### (Example 2)

A lithium-containing oxide was produced in the same manner as in Example 1, except that the molar ratio of the MnO powder and the Li₃VO₄ powder was changed to 0.5:0.5.

### (Example 3)

A lithium-containing oxide was produced in the same manner as in Example 1, except that the molar ratio of MnO powder (manufactured by Sigma-Aldrich Co. LLC), NiO powder (manufactured by FUJIFILM Wako Pure Chemical Corporation), and Li₃VO₄ powder was changed to 0.4:0.1:0.5.

### (Example 4)

A lithium-containing oxide was produced in the same manner as in Example 1, except that the molar ratio of MnO powder (manufactured by Sigma-Aldrich Co. LLC), Cr₂O₃ powder (manufactured by FUJIFILM Wako Pure Chemical Corporation), and Li₃VO₄ powder was changed to 0.4:0.1:0.5.

### (Comparative Example 1)

Lithium carbonate (manufactured by FUJIFILM Wako Pure Chemical Corporation), manganese (III) oxide (manufactured by FUJIFILM Wako Pure Chemical Corporation), manganese (IV) oxide, and TiO₂ (manufactured by FUJIFILM Wako Pure Chemical Corporation) were weighed to have a molar ratio of 6:2:1:3, mixed in a wet ball mill with ethanol and 8 mm diameter zirconia balls, and the mixed powder after filtration and drying was fired at 900°C for 12 hours in an argon atmosphere to obtain Li_{1.2}Mn_{0.5}Ti_{0.3}O₂.

### <Powder X-ray Diffraction>

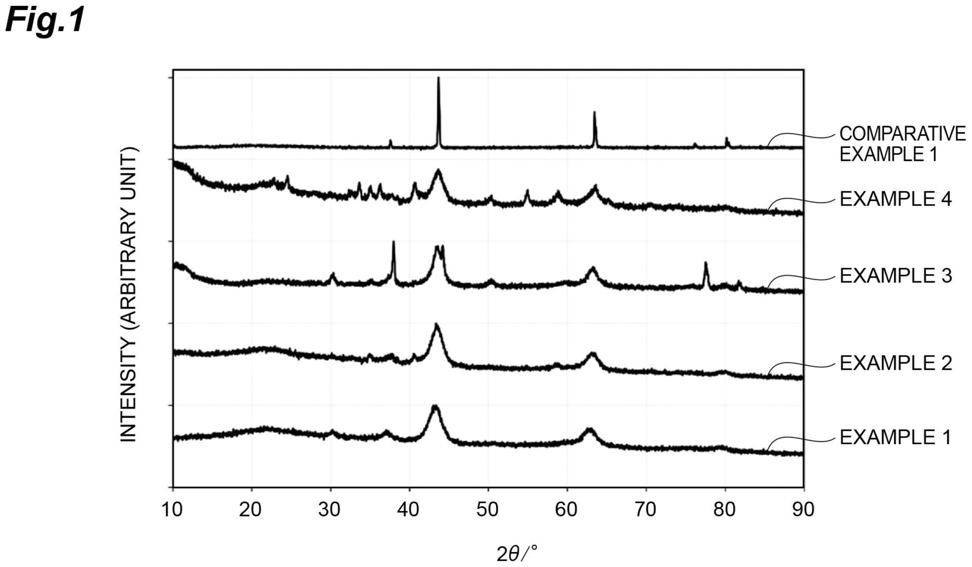

Powder X-ray diffraction measurement was performed on each lithium-containing oxide of the Examples and Comparative Examples using a powder X-ray diffraction measurement apparatus (Ultima IV, manufactured by Rigaku Corporation). The measurement was performed at room temperature (25°C). The said lithium-containing oxide was filled into a recess of a glass plate, the glass plate with the sample placed thereon was sealed in an airtight sample holder with a beryllium window to avoid air and moisture, and the measurement was performed without exposure to the atmosphere. Using a CuKα radiation source at an output of 40 kV and 40 mA, the measurement was performed in a diffraction angle 2θ range of 10° to 90° at a step of 0.02° and a speed of 2°/min. FIG. 1 shows an X-ray diffraction chart of each lithium-containing oxide.

### <Charge/Discharge Test>

### (1) Production of Positive Electrode

The lithium-containing oxides of Examples 1 to 4 and Comparative Example 1 (positive electrode active substances), acetylene black (trade name: HS-100, manufactured by Denka Company Limited) as a conductive material, and polytetrafluoroethylene (PTFE, product number: 6-J, Mitsui-Chemours Fluoroproducts Co., Ltd.) as a binder were respectively weighed to have a composition of positive electrode active substance:conductive material:binder = 70:20:10 (mass ratio). First, the positive electrode active substance and the conductive material were sufficiently mixed in an agate mortar, and the binder was added and further mixed. 7 mg of the mixture was weighed and stretched into a circular shape on the mortar. The stretched mixture was pressure-bonded to an aluminum mesh (100 mesh, manufactured by The Nilaco Corporation) with a thickness of 110 µm, which is a current collector, to obtain a positive electrode including the positive electrode active substance.

### (2) Production and Evaluation of Li Half-Cell

A coin-type battery CR2032 type was assembled using the said positive electrode, a polyethylene porous film (thickness 16 µm) as a separator, a 1 M LiPF₆ solution (the solvent is a mixed solvent including ethylene carbonate (EC), dimethyl carbonate (DMC), and ethyl methyl carbonate (EMC) at a volume ratio of 30:35:35) as a non-aqueous electrolytic solution, and metallic lithium as a counter electrode. The assembly of the battery was performed in a glove box in an argon atmosphere.

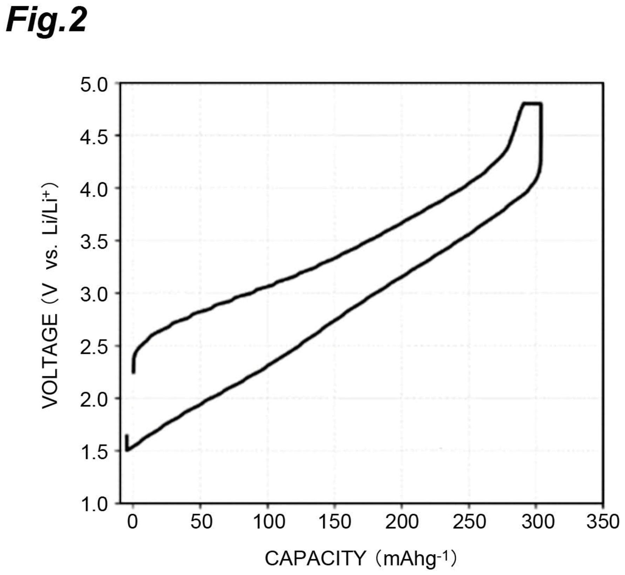

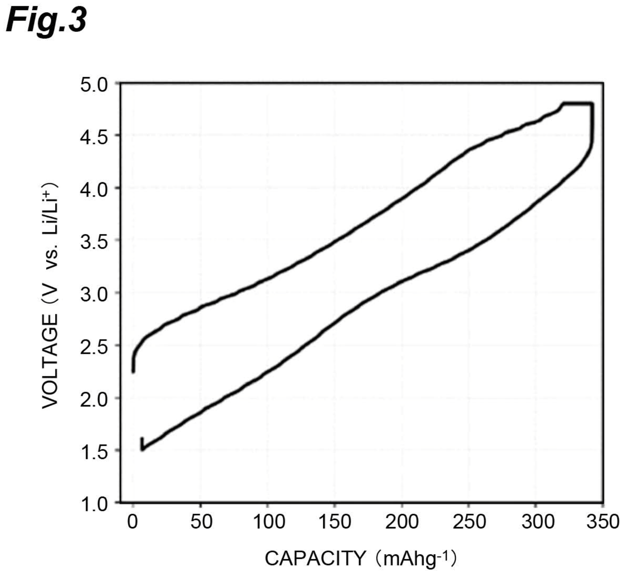

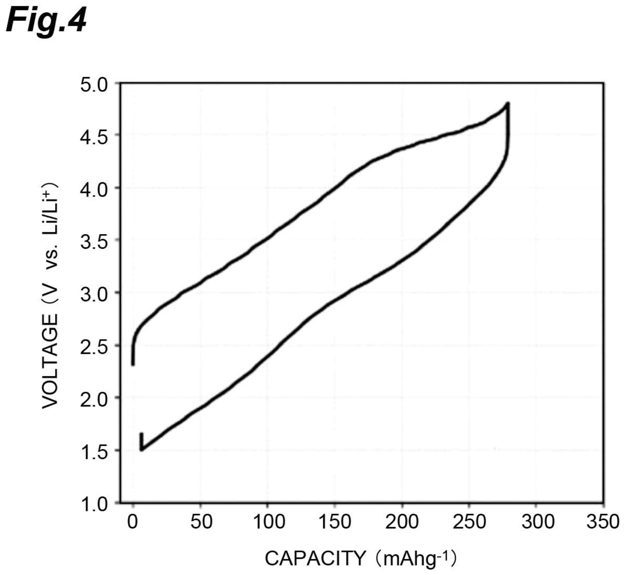

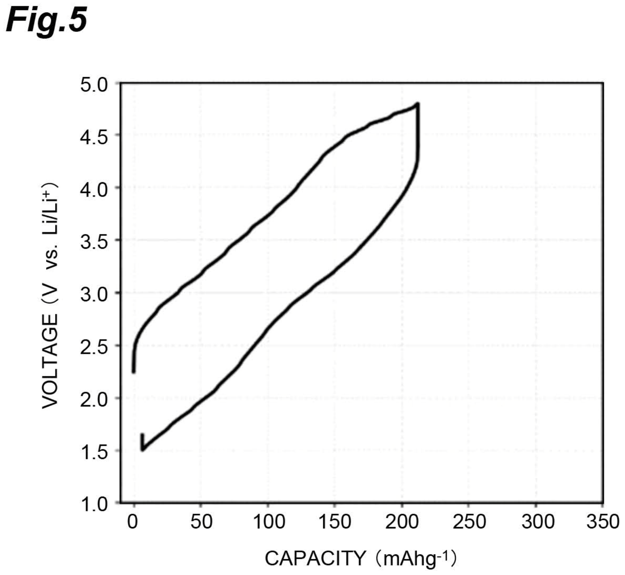

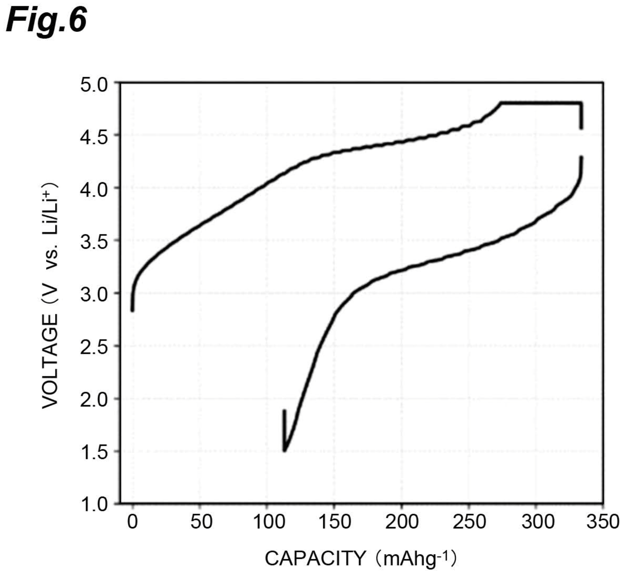

Using the produced coin-type battery, a charge/discharge test was performed at 25°C in a voltage range of 1.5 to 4.8 V under the following conditions. The measurement results of the initial energy efficiency (energy during discharge / energy during charge) are shown in Table 1. FIGS. 2 to 6 show the results of each charge/discharge test of Examples 1 to 4 and Comparative Example 1, respectively. Charging conditions:
Constant current-constant voltage charging (CC-CV) was performed at 30 mA/g with a cutoff condition of 6 mA/g.
Discharging conditions: Constant current (CC) discharge was performed at 30 mA/g.

### <Observation by Scanning Transmission Electron Microscope (STEM)>

Observation by a scanning transmission electron microscope (STEM) was performed under the following measurement conditions. In addition, along with the observation by STEM, measurement of electron energy loss spectroscopy (EELS) was performed using an EELS spectrometer (trade name: GIF Quantum, manufactured by GATAN, Inc.).
Apparatus: Analytical Electron Microscope ARM²00F, manufactured by JEOL Ltd.
Measurement conditions: Acceleration voltage 200 kV
Sample preparation: A sample of the lithium-containing oxide of Example 2 was prepared by a dry dispersion method in an inert atmosphere.

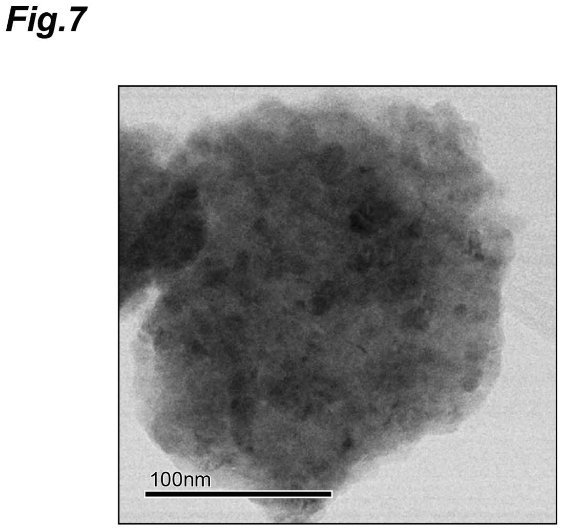

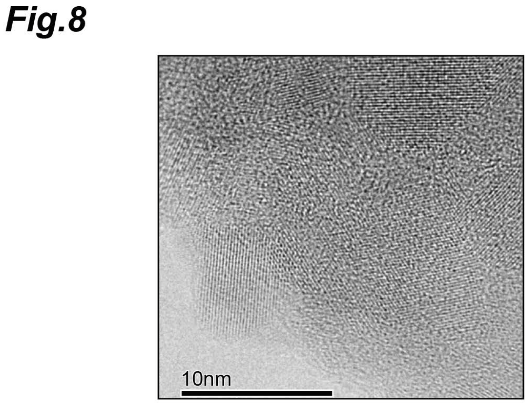

FIG. 7 shows a scanning transmission electron microscope (STEM) image of the sample of Example 2. FIG. 7 is a bright-field STEM image. FIG. 8 shows an enlarged view of the scanning transmission electron microscope image of FIG. 7. According to FIG. 8, it can be seen that a crystal phase and an amorphous phase are mixed.

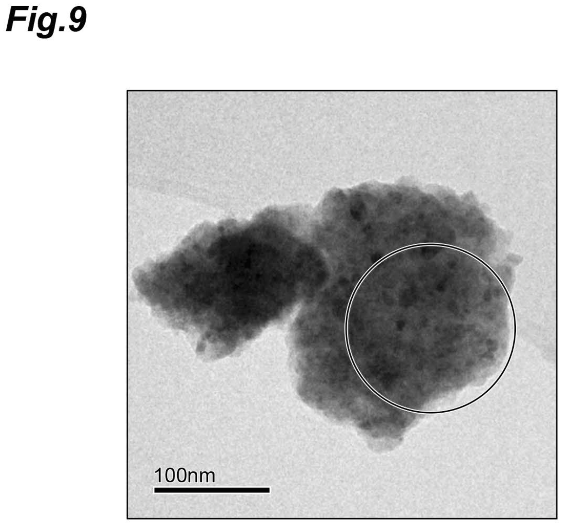

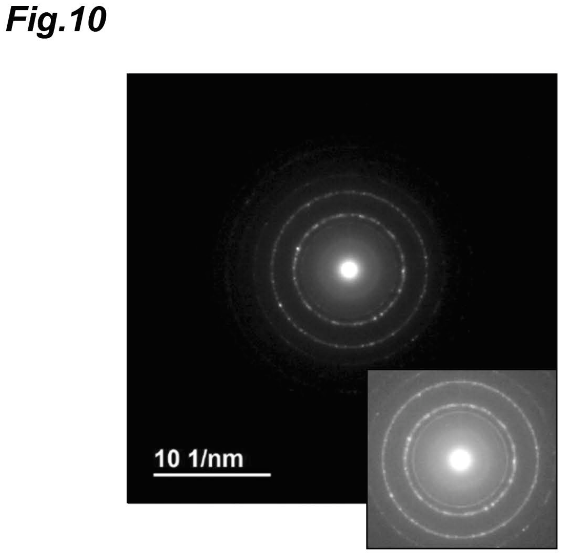

FIG. 9 shows a bright-field STEM image of the sample of Example 2. In addition, FIG. 10 shows a selected area electron diffraction pattern. A circle on the bright-field STEM image in FIG. 9 indicates an insertion position of an objective aperture (opening) when the selected area electron diffraction pattern of FIG. 10 was measured. The diagram in the lower right of FIG. 10 is a diagram with modified contrast. As can be seen from FIG. 10, a halo ring and a ring of diffraction spots are observed from the sample of Example 2, which indicates that an amorphous phase and a crystal phase are included. The radii of the rings of diffraction spots were 4.10 nm-1 ((111) plane), 4.72 nm-1 ((200) plane), and 6.66 nm-1 ((220) plane) from the inside. A halo ring and a ring of diffraction spots were also observed for the samples of Examples 1, 3, and 4.

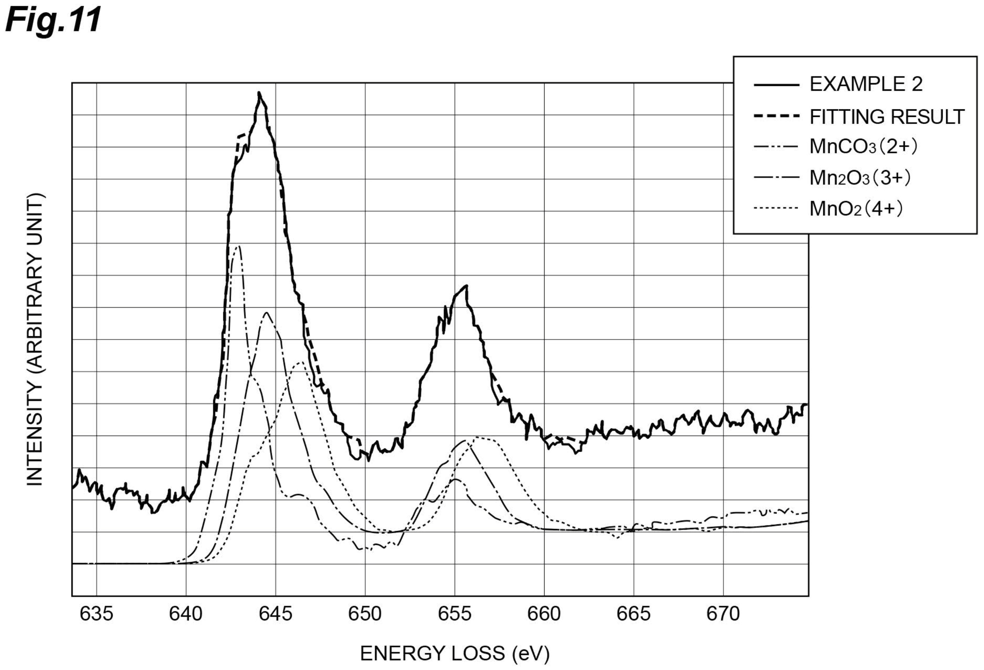

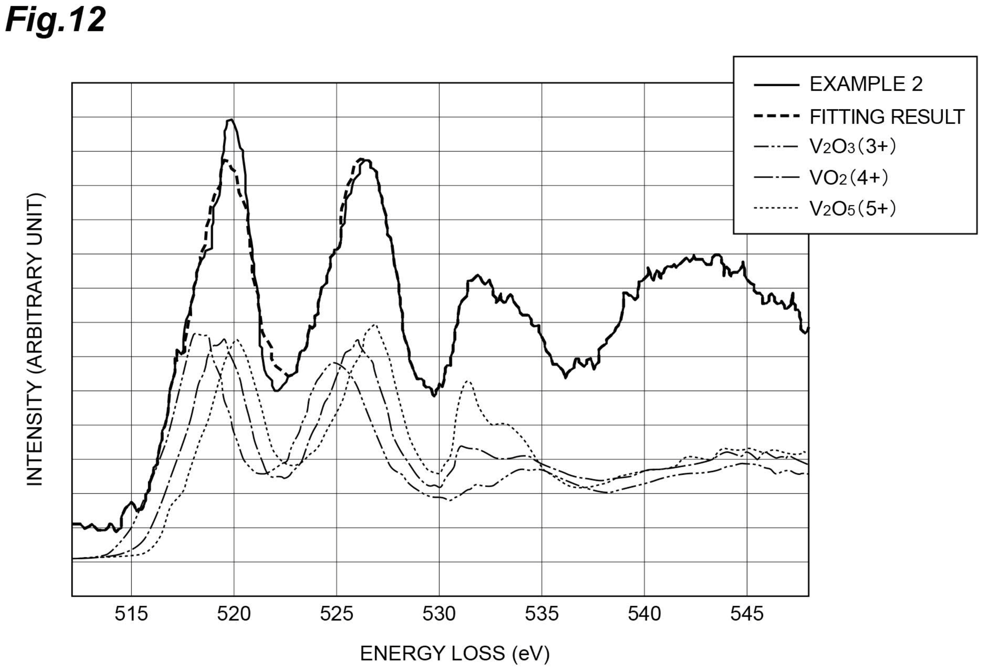

FIGS. 11 and 12 show EELS spectra of the sample of Example 2. FIG. 11 shows a region including the (L2, L3) spectrum of manganese in the EELS spectrum. FIG. 12 shows a region including the (L2, L3) spectrum of vanadium in the EELS spectrum. In the EELS spectra of the sample of Example 2 in FIGS. 11 and 12, the background has been removed. FIGS. 11 and 12 also show fitting curves obtained by performing linear least squares fitting. FIG. 11 also shows EELS spectra of MnCO₃, Mn₂O₃, and MnO₂ as standard compounds including Mn²⁺, Mn³⁺, and Mn⁴⁺, respectively. FIG. 12 also shows EELS spectra of V₂O₃, VO₂, and V₂O₅ as standard compounds including V³⁺, V⁴⁺, and V⁵⁺, respectively. From the analysis results of the EELS spectra, V with two kinds of valences, tetravalent and pentavalent, and Mn with two kinds of valences, divalent and trivalent, were detected from the sample of Example 2. For V and Mn, atoms with valences other than the above two kinds of valences were not detected.

The lithium-containing oxides of Examples 1, 3, and 4, and Comparative Example 1 were also measured and analyzed in the same manner. Table 1 shows the average valence of V and the ratio of V⁴⁺ and V⁵⁺, and the average valence of Mn and the ratio of Mn²⁺ and Mn³⁺.

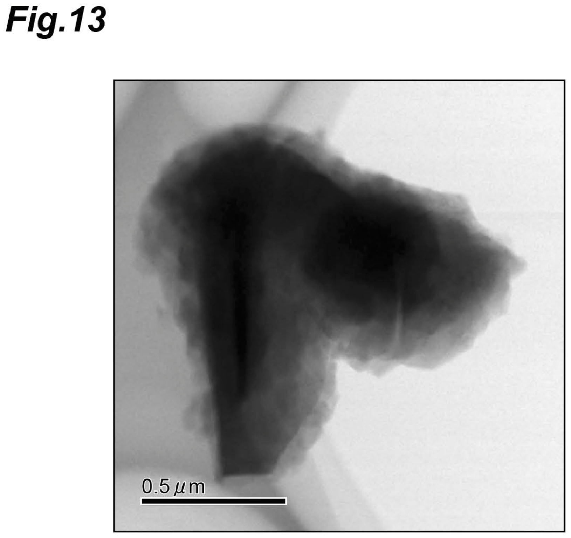

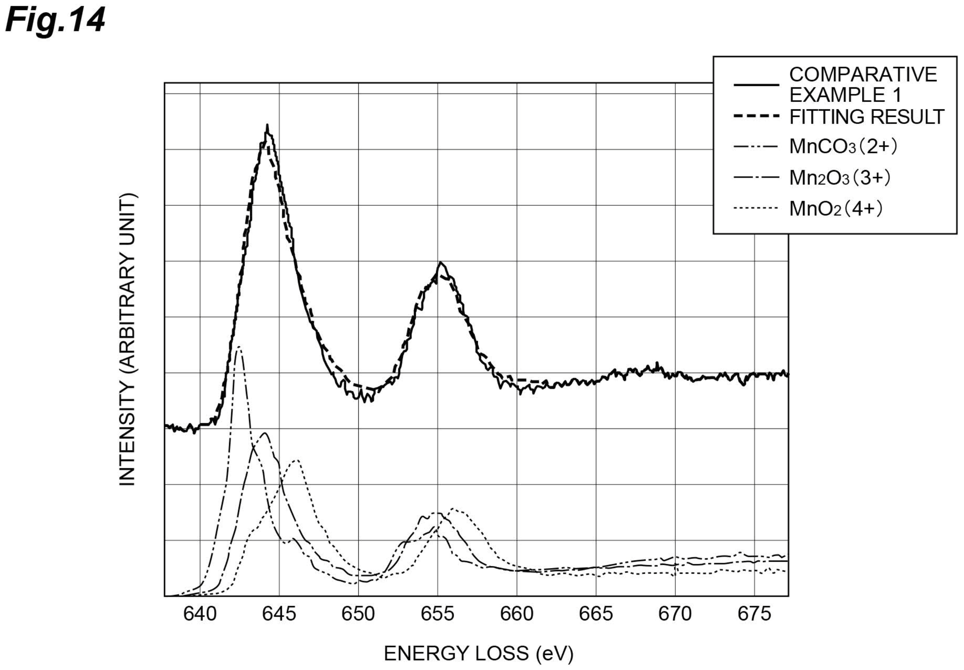

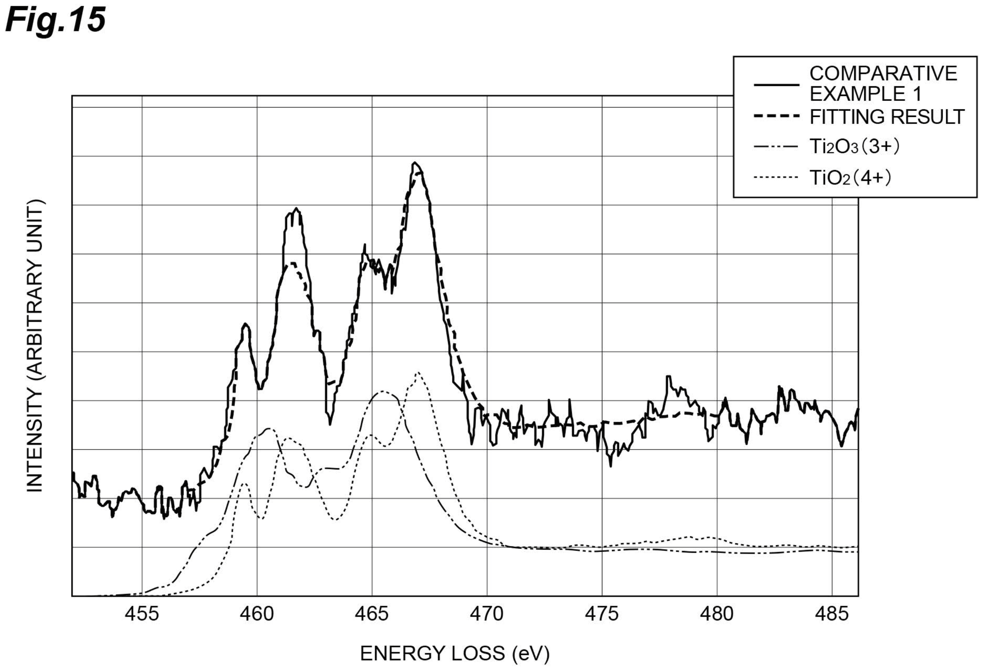

FIG. 13 shows a scanning transmission electron microscope image of the sample of Comparative Example 1. FIG. 13 is a bright-field STEM image. FIGS. 14 and 15 show EELS spectra of the sample of Comparative Example 1. FIG. 14 shows a region including the (L2, L3) spectrum of manganese in the EELS spectrum. FIG. 15 shows a region including the (L2, L3) spectrum of titanium in the EELS spectrum. Similarly to Example 2, the average valences of Mn and Ti were determined from the spectra.

**[Table 1]**

| | Composition | Average Valence | | Energy Efficiency (%) | Half Width (°) (200) |
|---|---|---|---|---|---|
| | | Mn | V | | |
| Example 1 | Li_{1.2}Mn_{0.6}V_{0.4}O_{2.2} | 2.50 Mn²⁺:50%, Mn³⁺:50% | 4.56 V⁴⁺:44%, V⁵⁺:56% | 79 | 1.93 |
| Example 2 | Li_{1.5}Mn_{0.5}V_{0.5}O_{2.5} | 2.47 Mn²⁺:53%, Mn³⁺:47% | 4.42 V⁴+:57%, V⁵⁺:43% | 74 | 1.65 |
| Example 3 | Li_{1.5}Ni_{0.1}Mn_{0.4}V_{0.5}O_{2.5} | 2.48 Mn²⁺:52%, Mn³⁺:48% | 4.69 V⁴⁺:31%, V⁵⁺:69% | 72 | 1.61 |
| Example 4 | Li_{1.5}Cr_{0.1}Mn_{0.4}V_{0.5}O_{2.55} | 2.64 Mn²⁺:36%, Mn³⁺:64% | 5 V⁵⁺:100% | 70 | 1.64 |
| Comparative Example 1 | Li_{1.2}Mn_{0.5}Ti_{0.3}O₂ | 3.19 Mn³⁺:81%, Mn⁴⁺:19% | (Ti⁴⁺:100%) | 47.1 | 0.128 |

## Claims

1. An alkali metal-containing oxide comprising an alkali metal element and a metal element M other than the alkali metal element,
wherein a ratio X/Y of a substance amount X of the alkali metal element included in the alkali metal-containing oxide to a substance amount Y of the metal element M is greater than 1.0 and not more than 2.0, and
the metal element M includes two or more kinds of metal elements M^{S}, each having a valence such that an absolute value of a difference between an average valence for a same element and an integer closest to the average valence is 0.1 to 0.5.

2. The alkali metal-containing oxide according to claim 1, wherein the metal element M^{S} contains V and Mn.

3. The alkali metal-containing oxide according to claim 1 or 2, wherein the metal element M^{S} includes a combination of two kinds of metal elements in which an absolute value of a difference in average valence is 1 or more.

4. An alkali metal-containing oxide comprising an alkali metal element and a metal element M other than the alkali metal element,
wherein a ratio X/Y of a substance amount X of the alkali metal element included in the alkali metal-containing oxide to a substance amount Y of the metal element M is greater than 1.0 and not more than 2.0,
the metal element M includes a metal element M¹ and a metal element M²,
an average valence for a same element of the metal element M¹ is a non-integer, an average valence for a same element of the metal element M² is tetravalent or higher, and
a difference: {(the average valence of the metal element M²) - (the average valence of the metal element M¹)} is 1 or more.

5. The alkali metal-containing oxide according to claim 4, wherein the metal element M¹ contains Mn, and the metal element M² contains V.

6. The alkali metal-containing oxide according to claim 1 or 4, having a crystal phase of a disordered rock-salt structure.

7. The alkali metal-containing oxide according to claim 1 or 4, having an amorphous phase.

8. The alkali metal-containing oxide according to claim 1 or 4, represented by a general formula: AₓMnₐM'_{b}V_{c}O_{2+y}.
(In the formula, 1<x≤2.0, 0.3≤a≤0.8, 0≤b≤0.3, 0.3≤c≤0.6, and 0≤y≤1.0, A is an alkali metal element, and M' contains at least one kind of element selected from the group consisting of Cr, Fe, Co, Ni, and Cu.)

9. The alkali metal-containing oxide according to claim 1 or 4, wherein when powder X-ray diffraction measurement is performed at 25°C using a CuKα ray, a peak having a half width of 0.5 to 5° is observed in a range of 2θ of 42 to 46°.

10. An electrode comprising the alkali metal-containing oxide according to claim 1 or 4.

11. A battery comprising the electrode according to claim 10.
